# EUROPÄISCHE PATENTSCHRIFT

(11) **EP 1 920 875 B1**
(45) Veröffentlichungstag und Bekanntmachung des Hinweises auf die Patenterteilung: **12.10.2011**
(21) Anmeldenummer: 07450192.5
(22) Anmeldetag: 25.10.2007
(51) Int. Cl.: B23P 15/40, B27L 11/00

(54) **Einweg-Schneidmesser zum Zerspanen von Natur- oder Kunststoffen und Verfahren zu deren Herstellung**
Disposable cutting blade for chipping natural or synthetic materials and method for its manufacture
Lame de coupe jetable destiné à couper des matières synthétiques ou naturelles et son procédé de fabrication

(30) Priorität: 13.11.2006 AT 18782006
(43) Veröffentlichungstag der Anmeldung: 14.05.2008
(73) Patentinhaber: Böhler Ybbstal Profil GmbH, 3333 Böhlerwerk (AT)
(72) Erfinder: Tejral, Franz, 3331 Hilm (AT)
(74) Vertreter: Wildhack & Jellinek

(56) Entgegenhaltungen:
- EP-A2- 0 271 481
- AT-B- 398 401
- DE-A1- 2 704 999

## Beschreibung

Die Erfindung bezieht sich auf ein Verfahren zur Herstellung von Schneidmessern, vorzugsweise von Einweg-Schneidmessem mit profiliertem Querschnitt zum Zerspanen von Natur- und Kunststoffen, insbesondere Messer für einen Einsatz in Holzspan-Hackmaschinen. Ein solches Verfahren ist aus der EP 0 271 481 bekannt.

Weiters betrifft die Erfindung ein Einweg-Schneidmesser mit profiliertem Querschnitt zum Zerspanen von Natur- oder Kunststoffen, insbesondere Messer für einen Einsatz in Holzspan-Hackmaschinen, bestehend aus einem Grundkörper, enthaltend zumindest einen Schneidkantenbereich mit durch zwei Flächen gebildeter Schneidkante und einem Befestigungsbereich mit einem Positioniermittel.

Messer der gattungsgemäßen Art gehören bereits in verschiedenen Ausführungsformen zum Stand der Technik. Der profilierte Querschnitt dient zur Fixierung und Positionierung der Messer in walzenförmigen Messerträgern, wobei die Eingriffsprofilierung vorzugsweise durch eine durchgehende, rückspringende Nut gebildet wird.

Aus der DE 27 04 999 A1 ist ein Verfahren und eine Anlage zur Herstellung von Bandstahlmessern bekannt geworden, wobei das Band mit einer zentrischen Feder oder Nut versehen wird und nachfolgend ein Härten und gegebenenfalls ein Anlassen der Schneidkanten erfolgt (erfolgen).

Es ist beispielsweise aus der AT 398 401 bekannt, das Messer aus einem zentrischen Trägerteil oder Grundkörper aus zähem Werkstoff und die die Schneiden bildenden Arbeitsteile aus hochlegiertem Werkzeugstahl zu fertigen, wobei die unlösbare Verbindung der Teile durch Schweißung erfolgt.

Die EP 0 271 481, die dem nächstliegenden Stand der Technik entspricht, offenbart ein Verfahren, bei welchem ein Schneidwerkzeug aus warmgewalztem, profiliertem Flachstahl unter Bildung einer Walzfahne im Schneidkantenbereich hergestellt wird.

Um den Aufwand bei einer Fertigung von Messern zu verringern, wurde schon vorgeschlagen, diese aus geringlegiertem, härtbaren Stahl zu fertigen. Derart ist im Vergleich mit einem hochlegierten Schneidteil zwar die Schneidhaltigkeit geringer, jedoch kann dieser Nachteil durch eine wirtschaftliche Fertigung der Einwegmesser, insbesondere Einweg-Wendeschneidmesser, überkompensiert werden.

Eine Herstellung obiger Messer erfolgt zumeist durch Warmwalzen von Vormaterial auf eine Querschnittsform mit einem geringen Übermaß zumindest im Bereich der Positioniermittel bzw. Nut, einem maßgerechten Schleifen der Nut und einem Ablängen auf Messerwalzenbreite, wonach eine thermische Vergütung der Einzelmesser durchgeführt wird.

Das thermische Vergüten kann durch ein Härten und Anlassen des gesamten Messers oder nur durch ein Härten und Anlassen der Schneidkantenbereiche erfolgen, wonach die Kanten geschliffen werden.

In ersterem Fall kann es zu nachteiligen Verzugserscheinungen des Messerkörpers kommen, beim letztgenannten Verfahren kann gegebenenfalls der Kantenbereich nicht tief genug einhärten, sodass zwar die Kante eine hohe Härte aufweist, der Kantenbereichsgrund jedoch bei stoßartiger Beanspruchung einer örtlichen Biegeverformung unterliegt.

Hier will die Erfindung die Nachteile im Stand der Technik vermeiden sowie die Gütemängel beseitigen und setzt sich zum Ziel, ein Verfahren der eingangs genannten Art zu schaffen, nach welchem besonders wirtschaftlich abmessungsgenau Schneidmesser, insbesondere Einweg-Wendeschneidmesser, hergestellt werden können, welche einen Grundkörper mit hoher Festigkeit und zumindest einen Schneidenbereich mit hoher Härte aufweisen.

Weiters ist Aufgabe der Erfindung, ein Einweg-Schneidmesser mit verbesserten Einsatz- und Gebrauchseigenschaften anzugeben.

Das Ziel wird bei einem gattungsgemäßen Verfahren dadurch erreicht, dass in einem ersten Schritt aus einem Vormaterial mit großer Längserstreckung und rundem, ovalem oder polygonalem Querschnitt und mit bearbeiteter Oberfläche im Durchlauf bei erhöhter Temperatur im Bereich der kubisch-raumzentrierten Atomstruktur des Eisenbasis-Werkstoffes ein Profilrohteil in einer Vielfach-Messerlänge mit anforderungsgerechten Querschnittsabmessungen des Grundkörpers und geringem Überragen der Schneidkante(n), durch Walzen mit zumindest einer Walzfahne, geformt, die Festigkeit des Messerwerkstoffes erhöht und zu einer Lagereinheit gefasst wird, worauf,
in einem zweiten Schritt von der Lagereinheit das Profilrohteil abgenommen, im Durchlauf der (die) Schneidkantenbereich(e) gehärtet angelassen und durch Schleifen jeweils zumindest einer Walzfahnen- oder Schneidkantenfläche die Schneidkanten abmessungsgenau erstellt und geschärft werden, wonach ein Ablängen von unmittelbar einbaubaren Einweg-Schneidmessern erfolgt.

Die mit dem erfindungsgemäßen Verfahren erreichten Vorteile sind im Wesentlichen in einer vorteilhaften Gefügeausbildung bzw. Festigkeits- und Härteverteilung des Werkstoffes über den Querschnitt des Messers einer anforderungsgemäß genauen Paßnut zur präzisen Festlegung desselben im Messerträger, einem verminderten Schleifaufwand und einer kostengünstigen Fertigungstechnologie zu sehen.

Für eine erfindungsgemäße Messerfertigung wird mit günstigem Verhältnis von Volumen zu Oberfläche das Vormaterial bearbeitet und derart eine Oberflächenentkohlung, die von dem Warmwalzen herrühren kann, beseitig sowie die Querschnittsform genau gefertigt.

Dieses Vormaterial, welches als Bund, Ring oder dgl. vorliegen kann, wird in einem ersten Schritt im Durchlauf auf eine Temperatur von beispielsweise 700°C oder niedriger, durch elektrische Induktion erwärmt und zu einem Profilteil geformt. Je nach Profilgestalt und gewünschter Erhöhung der Festigkeit des Grundkörpers kann auf einfache Weise die erforderliche Temperatur gewählt werden, wobei die Profiloberfläche zunder- und entkohlungsfrei erhalten bleibt und anforderungsgemäße, genaue Querschnittsabmessungen gebildet werden. Mittels der gewählten Temperatur ist es weiters möglich, am Walzgut mit Vorteil eine günstige Walzfahne auszuformen. Weil nun erfindungsgemäß eine Formgebung bei kubisch-raumzentrierter Atomstruktur des Eisenbasiswerkstoffes erfolgt, kann eine Abkühlung bei einem Verbringen des Walzgutes zu einer Lagerung bzw. Zwischenlagerung keine Materialhärtung mehr bewirken.

Der zweite Verfahrensschritt dient einer Fertigung des einsatzgemäßen Messers. Von der Lagereinheit wird dabei das Profilrohteil abgenommen, gegebenenfalls gerichtet und induktiv die Schneidkantenbereiche im Durchlauf auf eine Temperatur mit kubischflächenzentrierter Atomstruktur erwärmt und rasch abgekühlt.

Bei einem raschen Aufwärmen und dgl. Abkühlen erfolgt, wie gefunden wurde, kein vom Fachmann erwartetes Materialerweichen durch Erholung und Rekristallisation beim Übergang der gehärteten Zone des Schneidenbereiches in den durch Verformung verfestigten Grundkörperbereich. Weil nun eine Walzfahne vorliegt, erfolgt eine besonders gleichmäßige Erwärmung der Schneidkantenbereiche auf Härtetemperatur und es werden Überhitzungen dünn auslaufender Kanten vermieden. Ein unmittelbar nachfolgendes Anlassen des martensitischen Gefüges dient zu Erhöhung der Zähigkeit des gehärteten Werkstoffes der Kante.

Die im ersten Verfahrensschritt erstellte Walzfahne hat weiters noch den Vorteil, dass beim Beschleifen zur Bildung zumindest einer Schneidkante keine großflächige oder großvolumige Abtragung erforderlich ist, die die Gefahr einer zu hohen Wärmeeinbringung in die und eine Erweichung der Kante in sich birgt. Allenfalls ist vorteilhaft, dass die Schneidkanten mit genauem Abstand vom Positioniermittel bzw. von der Positioniernut im Durchlauf hergestellt werden.

Schließlich kann ein Ablängen von unmittelbar einbaubaren Einweg-Schneidmessern in präziser Längserstreckung im Ablauf erfolgen und eine Verpackung derselben vorgenommen werden.

Aus wirtschaftlichen Gründen und hinsichtlich einer raschen Neubestückung von Messerträgern in Bearbeitungsmaschinen kann es günstig sein, wenn das Messer als Wendeschneidmesser ausgebildet wird.

Wenn mit Vorteil als Vormaterial ein geschälter, weichgeglühter Walzdraht einer härtbaren Legierung eingesetzt wird, können im ersten Schritt des erfindungsgemäßen Verfahrens ein hochumgeformtes, verfestigtes Profilrohteil mit präzisen, anforderungsgerechten Querschnittsabmessungen und im Folgeschritt passgenaue Einwegmesser wirtschaftlich hergestellt werden.

Die Festigkeit des Werkstoffes bei einer sogenannten Kaltverformung im kubisch-raumzentrierten Bereich der Atomstruktur der Legierung steigt mit dem Umformgrad. Ausgehend von einem beispielsweise einen runden Querschnitt aufweisenden Vormaterial ist bei einer Verformung desselben zu einem Profilteil mit anforderungsgemäßen Querschnittsabmessungen des Grundkörpers der örtliche Umformungsgrad zum Kantenbereich hin erhöht. Dementsprechend ist auch in vorteilhafter Weise die Materialfestigkeit des Profilteiles zur Walzfahne hin erhöht.

Nach einer besonders bevorzugten Ausführungsform der Erfindung erfolgt bei einem Walzen des Vormaterials mit kubisch-raumzentrierter Atomstruktur des Eisenbasiswerkstoffes eine Erhöhung der Festigkeit des Messerwerkstoffes im Bereich des Grundkörpers auf mindestens 950 N/mm², vorzugsweise auf mindestens 1050 N/mm². Dadurch wird ein Eindrücken des gehärteten Bereiches der Schneidkante in den Grundkörper allenfalls vermieden.

Wird als Lagereinheit das Rohprofilteil als Ring oder Bund gebildet, kann der Abfall bei der Messerfertigung mit Sicherheit minimiert werden.

Die weitere Aufgabe der Erfindung wird bei einem gattungsgemäßen Einwegmesser mit profiliertem Querschnitt dadurch gelöst, dass der Grundkörper aus einem mit kubisch- raumzentrierter Atomstruktur verformten Eisenbasiswerkstoff mit einer Festigkeit von
größer 950 N/mm² besteht, der Befestigungsbereich eine durch Umformung gebildete, unbearbeitete Oberfläche aufweist und der (die) Schneidkantenbereich(e) jeweils eine mittels Härten und Anlassen erstellte Gefügestruktur mit einer Härte von mindestens 58 HRC besitzt, wobei die Schneidkante(n) und deren parallele Beabstandung vom Positioniermittel und gegebenenfalls voneinander durch Schleifen jeweils der Walzfahne oder zumindest einer der die Schneidkante(n) bildende Fläche erstellt sind.

Die mit dem erfindungsgemäßen Einwegmesser erreichten Vorteile sind insbesondere darin zu sehen, dass der im Wesentlichen kaltverformte Werkstoff eine hohe Festigkeit und daher eine hohe Stabilität aufweist. Im Langzeitbetrieb können dadurch verbesserte Gebrauchseigenschaften des Schneidteiles erreicht werden, weil einerseits hohe Einbaugüte und stabile Halterung im Messerträger und andererseits verbesserte Stützwirkung des hochgehärteten Schneidenbereichs gegeben sind. Wenn dabei der thermisch vergütete Schneidkantenbereich eine Härte von mindestens 58 HRC, vorzugsweise von 60 HRC und höher besitzt, ist eine überragende Schneidhaltigkeit des Messers erreichtbar. Dabei sind die Schneidkanten durch Schleifen erstellt, wobei eine parallele Beabstandung der Kanten vom Positioniermittel günstig und die Schneidkantenform selbst besonders vorteilhaft auf einer Walzfahne gebildet sind.

Wenn, wie nach einer Ausführungsform der Erfindung die die Schneide bildende Fläche eine Gegenfacette aufweist, kann auf einfache Weise durch einseitiges Beschleifen einer Walzfahne eine gewünschte Schneidengeometrie erstellt sein.

Ist die Schneidkante durch Beschleifen der Walzfahne gebildet, kann eine besonders förderliche Spanbildung im praktischen Einsatz des Messers erreicht werden.

Im Folgenden wird die Erfindung an Hand von lediglich einen Ausführungsweg darstellenden Zeichnungen näher erläutert. Es zeigt
- Fig. 1: ein Wendeschneidmesser, schematisch
- Fig. 2: einen Schneidkantenbereich mit Walzfahne
- Fig. 3: einen Schneidkantenbereich mit Walzfahne und Gegenfacette
- Fig. 4: einen Schneidkantenbereich mit Gegenfacette, beschliffen

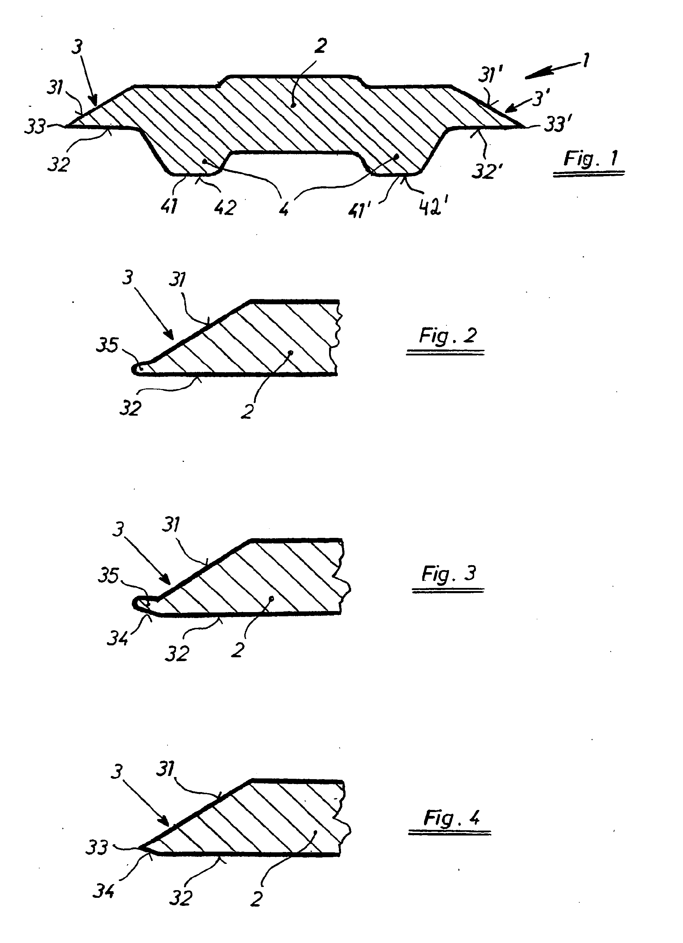

In Fig. 1 ist ein Wendeschneidmesser 1, bestehend aus einem Grundkörper 2 und zwei Schneidkantenbereiche 3,3' dargestellt. Einerseits ist am Grundkörper 2 ein Befestigungsbereich 4 mit zwei Positioniermitteln 41, 41' ausgeformt, die Anlageflächen 42,42' aufweisen, welchem eine Pressfläche am Grundkörper 2 gegenüberliegt.

Der Grundkörper 2 besitzt eine im Wesentlichen durch eine Kaltverformung erstellte, verfestigte Gefügestruktur mit gestreckter Kornform des Gefüges.

Die Schneidkantenbereiche 3,3' sind durch die Schneidkanten 33,33' bildende, zueinander geneigten Flächen 31,32,31',32' erstellt, wobei gemäß der Erfindung die Mikrostruktur des Bereiches 3,3' ein Vergütungsgefüge aus angelassenem Martensit aufweist.
Mindestens eine Schrägfläche 31,31' ist durch Schleifen derart bearbeitet, dass die Kanten 33,33' den gleichen Abstand von den Positioniermitteln 41,41' des Befestigungsbereiches 4 beisitzen.

Fig. 2 zeigt einen erfindungsgemäßen Schneidenbereich 3 eines Grundkörpers 2 mit einer Walzfahne 35 und zueinander geneigten mit Flächen 31,32. Zur Erstellung einer genau vom Positionierelement 41 beabstandeten, Schneidkanten ist lediglich eine Walzfahne 35 in Richtung einer Schrägfläche 31 geringfügige zu beschleifen.

Fig. 3 zeigt einen erfindungsgemäßen Schneidkantenbereich 3 eines Grundkörpers 2 mit einer durch eine Gegenfacette 34 abgeschrägten Walzfahne 35.

Bei einem Beschleifen der Walzfahne 35 in Richtung einer Schrägfläche 31 wird, wie Fig. 4 zeigt, eine Schneidkante 33 durch die Schrägfläche 31 und der Fläche der Gegenfacette 34 gebildet.

## Patentansprüche

1. Verfahren zur Herstellung von Schneidmessern (1), vorzugsweise von Einweg-Schneidmessem mit profiliertem Querschnitt zum Zerspanen von Natur- und Kunststoffen, insbesondere Messer für einen Einsatz in Holzspan-Hackmaschinen, **dadurch gekennzeichnet, dass**
in einem ersten Schritt aus einem Vormaterial mit großer Längserstreckung und rundem, ovalem oder polygonalem Querschnitt und mit vorzugsweise bearbeiteter Oberfläche im Durchlauf bei erhöhter Temperatur im Bereich der kubischraumzentrierten Atomstruktur des Eisenbasis-Werkstoffes ein Profilrohteil in einer Vielfach-Messerlänge mit anforderungsgerechten Querschnittsabmessungen des grundkörpers (2) und geringem Überragen der Schneidkante(n) (33,33'),
durch Walzen mit zumindest einer Walzfahne (35), geformt, die Festigkeit des Messerwerkstoffes erhöht und zu einer Lagereinheit gefasst wird, worauf in einem zweiten Schritt von der Lagereinheit das Profilrohteil abgenommen, im Durchlauf der (die) Schneidkantenbereich(e) (3,3') gehärtet, angelassen und durch Schleifen jeweils zumindest einer Walzfahnen- oder Schneidkantenfläche die Schneidkanten (33,33') abmessungsgenau erstellt und geschärft werden, wonach ein Ablängen von ummittelbar einbaubaren Einweg-Schneidmessem (1) erfolgt.

2. Verfahren nach Anspruch 1, **dadurch gekennzeichnet, dass** das Messer (1) als Wendeschneidmesser ausgebildet wird.

3. Verfahren nach Anspruch 1 oder 2, **dadurch gekennzeichnet, dass** als Vormaterial ein vorzugsweise weichgeglühter Walzdraht eingesetzt wird.

4. Verfahren nach einem der Ansprüche 1 bis 3, **dadurch gekennzeichnet, dass** eine Erhöhung der Festigkeit des Messerwerkstoffes auf mindestens 950 N/mm², vorzugsweise auf mindestens 1050 N/mm² durch Verformen erfolgt.

5. Verfahren nach einem der Ansprüche 1 bis 4, **dadurch gekennzeichnet, dass** als Lagereinheit das Profilrohteil als Ring oder Bund gebildet wird.

6. Einweg-Schneidmesser (1) mit profiliertem Querschnitt zum Zerspanen von Natur- oder Kunststoffen, insbesondere Messer für einen Einsatz in Holzspan-Hackmaschinen, bestehend aus einem Grundkörper (2), enthaltend zumindest einen Schneidkantenbereich (3,3') mit durch zwei Flächen (31,31',32,32') gebildeter Schneidkante (33,33') und einem Befestigungsbereich (4) mit einem Positioniermittel (41,41'), vorzugsweise hergestellt nach einem Verfahren gemäß den vorgeordneten Ansprüchen, **dadurch gekennzeichnet, dass** der Grundkörper (2) aus einem mit kubisch-raumzentrierter Atomstruktur verformten Eisenbasiswerkstoff mit einer Festigkeit von größer 950 N/mm² besteht, der Befestigungsbereich (4) eine durch Umformung gebildete, unbearbeitete Oberfläche aufweist und der (die) Schneidkantenbereich(e) (3,3') jeweils eine mittels Härten und Anlassen erstellte Gefügestruktur mit einer Härte von mindestens 58 HRC besitzt, wobei die Schneidkante(n) (33,33') und deren parallele Beabstandung vom Positioniermittel (41,41') und gegebenenfalls voneinander durch Schleifen jeweils einer Walzfahne (35,35') oder zumindest einer der die Schneidkante(n) (33,33') bildende Fläche (31,31',32,32') erstellt sind.

7. Einweg-Schneidmesser nach Anspruch 6, **dadurch gekennzeichnet, dass** dieses als Wendeschneidmesser gebildet ist.

8. Einweg-Schneidmesser nach Anspruch 6 oder 7, **dadurch gekennzeichnet, dass** die die Schneide (33,33') bildende Fläche (31,31') eine Gegenfacette (34,34') aufweist.

9. Einweg-Schneidmesser nach einem der Ansprüche 6 bis 8, **dadurch gekennzeichnet, dass** die Schneidkante(n) (33,33') durch Schleifen jeweils einer diese bildenden Fläche (31,31') erstellt ist.

10. Einweg-Schneidmesser nach einem der Ansprüche 6 bis 9, **dadurch gekennzeichnet, dass** die Schneidkante (33,33') durch Schleifen der Walzfahne (35) erstellt ist.

## Claims

1. A method for manufacturing cutting knives (1), preferably disposable cutting knives having a profiled cross-section for chipping natural and synthetic materials, especially knives for use in wood chipping machines, **characterised in that**
- in a first step, a profiled unmachined part of a length of several knives, the cross-sectional dimensions of the main body (2) corresponding to the requirements and the cutting edge(s) (33, 33') being of slight oversize, said profiled unmachined part having at least one burr (35), is formed by rolling from a precursor material of great length having a round, oval or polygonal cross-section and preferably a machined surface, in the course of a continuous operation at an elevated temperature in a range at which the atomic structure of the iron-based material is cubic and body centred; the strength of the knife material is increased and a storage unit is obtained,
- after which, in a second step, the profiled unmachined part is taken from the storage unit, the cutting edge area(s) (3, 3') is/are hardened and tempered in the course of a continuous operation, and the cutting edges (33, 33') are formed true to the dimensions by grinding and sharpening at least one burr or cutting edge surface and are sharpened, whereafter the material is cut into directly integrable disposable cutting knives (1).

2. The method according to claim 1, **characterised in that** the knife (1) is manufactured in the form of an indexable insert.

3. The method according to claim 1 or claim 2, **characterised in that** a shelled and close annealed wire rod is preferably used as precursor material.

4. The method according to any one of the claims 1 to 3, **characterised in that** the strength of the knife material to at least 950 N/mm², preferably to at least 1,050 N/mm², is increased by deformation.

5. The method according to any one of the claims 1 to 4, **characterised in that** the storage unit of the profiled unmachined part has the form of a bundle or a coil.

6. A disposable cutting knife (1) having a profiled cross-section for chipping natural or synthetic materials, especially a knife for use in wood chipping machines, said knife consisting of a main body (2) comprising at least one cutting edge area (3, 3') with a cutting edge (33, 33') formed by two surfaces (31, 31', 32, 32'), and a fastening area (4) with a positioning means (41, 41') and being preferably manufactured by a method according to any of the preceding claims, **characterised in that** the main body (2) consists of an iron-based material having a cubic, body-centred atomic structure and a strength of more than 950 N/mm², the fastening area (4) has an unmachined surface formed by deformation, and the cutting edge area(s) (3, 3') has/each have a structural constitution formed by hardening and tempering and having a hardness of at least 58 HRC, the cutting edge(s) (33, 33') and its/their parallel spacing from the positioning means (41, 41') and optionally from one another being established by grinding one burr (35, 35') or at least one the surfaces (31, 31', 32, 32') forming the cutting edge(s) (33, 33').

7. The disposable cutting knife according to claim 6, **characterised in that** said knife is manufactured in the form of an indexable insert.

8. The disposable cutting knife according to claim 6 or claim 7, **characterised in that** the surface (31, 31') forming the cutting edge (33, 33') has a counter edge (34, 34').

9. The disposable cutting knife according to any one of the claims 6 to 8, **characterised in that** the cutting edge(s) (33, 33') is/are formed by respectively grinding and sharpening one of the surfaces (31, 31') forming them.

10. The disposable cutting knife according to any one of the claims 6 to 9, **characterised in that** the cutting edge (33, 33') is formed by grinding the burr (35).

## Revendications

1. Procédé pour la fabrication de couteaux (1), de préférence de couteaux à usage unique avec une section transversale profilée pour couper des matériaux naturels et synthétiques, notamment de couteaux pour l'usage dans des hache-bois,
**caractérisé en ce que**,
dans une première étape, une ébauche profilée avec une longueur de plusieurs couteaux, son corps de base (2) ayant des dimensions en coupe transversale selon les exigences et son arête/ses arêtes (33, 33') étant faiblement en saillie, est formée par laminage, ainsi qu'elle ait au moins une barbe (35), d'une matière brute d'une grande longueur et d'une section transversale ronde, ovale ou polygonale et, de préférence, avec une surface usinée en continu à une température élevée à laquelle la structure atomique de la matière à base de fer est cubique et centrée dans l'espace, la résistance de la matière de couteaux est augmentée et une unité de stock est obtenue, et, après, dans une deuxième étape, ladite ébauche profilée est enlevée de ladite unité de stock, le(s) domaine(s) d'arêtes (3, 3') est/sont trempé(s) et recuit(s) en continu et les arêtes (33, 33') sont formées de manière précise par l'affûtage d'au moins une surface de la barbe ou d'une arête et affilées, après quoi des couteaux (1) à usage unique pour être directement montés sont coupés à longueur.

2. Procédé selon la revendication 1, **caractérisé en ce que** le couteau (1) a la forme d'une plaquette amovible.

3. Procédé selon la revendication 1 ou 2, **caractérisé en ce que**, de préférence, un fil laminé recuit est utilisé comme matière brute.

4. Procédé selon l'une des revendications 1 à 3, **caractérisé en ce qu'**en déformant la matière des couteaux, sa résistance est augmentée au moins à 950 N/mm², de préférence au moins à 1050 N/mm².

5. Procédé selon l'une des revendications 1 à 4, **caractérisé en ce que** l'unité de stock a la forme d'une couronne ou d'un rouleau.

6. Couteau à usage unique avec une section transversale profilée pour couper des matériaux naturels et synthétiques, notamment un couteau pour l'usage dans des hache-bois, ledit couteau consistant en un corps de base (2) qui comprend au moins un domaine d'arêtes (3, 3') avec une arête (33, 33') formée par deux surfaces (31, 31', 32, 32') et un domaine de fixation (4) avec un moyen de positionnement (41, 41'), ledit couteau étant, de préférence, fabriqué par un procédé selon l'une des revendications précédentes, **caractérisé en ce que** ledit corps de base (2) consiste en une matière à base de fer déformée avec une structure atomique cubique et centrée dans l'espace et une résistance de plus de 950 N/mm², que ledit domaine de fixation (4) a une surface non usinée qui est formée par déformation, et que le(s) domaine(s) d'arêtes (33, 33') respectivement a/ont une structure qui est établie en la trempant et en la recuisant est a une dureté d'au moins 58 HRC, l'arête/les arêtes (33, 33') et leur écartement parallèle dudit moyen de positionnement (41, 41') et, facultativement, entre elles sont réalisés par l'affûtage d'une barbe (35, 35') respective ou d'au moins une surface (31, 31', 32, 32') formant l'arête/les arêtes (33, 33').

7. Couteau à usage unique selon la revendication 6, **caractérisé en ce que** ledit couteau a la forme d'une plaquette amovible.

8. Couteau à usage unique selon la revendication 6 ou 7, **caractérisé en ce que** la surface (31, 31') qui forme l'arête (33, 33') a une contre-facette (34, 34').

9. Couteau à usage unique selon l'une des revendications 6 à 8, **caractérisé en ce que** l'arête/les arêtes (33, 33') est formée/sont formées par l'affûtage d'une des surfaces (31, 31') qui la/les forment.

10. Couteau à usage unique selon l'une des revendications 6 à 8, **caractérisé en ce que** l'arête (33, 33') est formée par l'affûtage de la barbe (35).
